Europäisches Patentamt

European Patent Office

Office européen des brevets

(11) Veröffentlichungsnummer: **0 158 352**
**A2**

# (12) EUROPÄISCHE PATENTANMELDUNG

(21) Anmeldenummer: **85104397.6**

(22) Anmeldetag: **11.04.85**

(51) Int. Cl.⁴: **G 01 N 29/04**

(30) Priorität: **13.04.84 DE 3414071**

(43) Veröffentlichungstag der Anmeldung:
**16.10.85 Patentblatt 85/42**

(84) Benannte Vertragsstaaten:
**DE FR GB IT NL SE**

(71) Anmelder: **Nukem GmbH
Rodenbacher Chaussee 6 Postfach 11 00 80
D-6450 Hanau 11(DE)**

(72) Erfinder: **Kowol, Ewald
Jahnstrasse 24
D-6393 Wehrheim(DE)**

(72) Erfinder: **Zwanzig, Dieter
Justus-von-Liebig Strasse 11
D-6454 Bruchköbel(DE)**

(72) Erfinder: **Jehl, Hans-Jörgen
Kastanienweg 18 a
D-8755 Alzenau(DE)**

(74) Vertreter: **Stoffregen, Hans-Herbert, Dr.
Dipl.-Phys. et al,
Patentanwälte Strasse & Stoffregen Salzstrasse 11a
Postfach 2144
D-6450 Hanau/Main 1(DE)**

(54) **Elektrodynamischer Wandler.**

(57) Der Wandlerkopf (10) eines auf ein Werkstück (14) aufgesetzten und auf diesem bewegten elektrodynamischen Wandlers weist werkstückseitig eine abriebfeste Panzerung (26) auf, die in einem Gleitschutzelement (22) durch Auftragsschweißung hergestellt ist.

Fig.2

EP 0 158 352 A2

NUKEM GmbH
Rodenbacher Chaussee 6
6450 Hanau/Main 11

Elektrodynamischer Wandler

Die Erfindung bezieht sich auf einen elektrodynamischen Wandler zur zerstörungsfreien Prüfung von Werkstücken mittels Ultraschall mit einem Magneten, der ein Magnetjoch mit äußerem Polschuh und einem von diesem umgebenen vorzugsweise sich in Richtung des Werkstücks hin konisch verjüngenden inneren Polschuh aufweist, im Bereich dessen freier dem Werkstück zugewandter Stirnfläche Erreger- und Empfangsspulen angeordnet sind, die ihrerseits zumindest auf der dem Werkstück zugewandten Seite eine Abdeckung aufweisen.

Ein entsprechender elektrodynamischer Wandler ist der GB-A-20 06 433 zu entnehmen. Der -wie üblich- als Elektromagnet ausgebildete Magnet besteht dabei aus zwei koaxial angeordneten Polen, deren dem zu überprüfenden Werkstück zugewandten Stirnseiten der Geometrie der Oberfläche des zu überprüfenden Werkstücks entsprechen. Auf dem inneren Polschuh, der ebenfalls aus zwei koaxial zueinander angeordneten Abschnitten besteht, ist auf der Frontfläche eine Erreger- und Empfangsspule angeordnet, die werkstückseitig von einer Keramikschicht und magnetpolseitig von einer Isolierschicht abgedeckt ist. Bei einer entsprechenden Ausbildung der Polschuhe kann unter anderem der Nachteil auftreten, daß eine von dem zu überprüfenden Werkstück erfolgte Rückkopplung und die damit bedingte Erzeugung von Wirbelströmen in den Polschuhen derart erfolgt, daß eine

. . .

Beeinflussung der Meßsignalauflösung auftritt. Auch besteht nicht die Möglichkeit, einen entsprechenden elektrodynamischen Wandlerkopf im Bereich der Erreger- und Empfangsspule unmittelbar auf dem Werkstück aufzusetzen, um Messungen bei rotierendem Elektromagnet und/oder sich drehendem Werkstück durchzuführen, da andernfalls aufgrund der wie Schmirgelpapier wirkenden Oberfläche des Werkstücks eine umgehende Zerstörung der Erreger- und Empfangsspule erfolgen würde. Die aus Keramikmaterialien bestehende Abdeckung ist jedoch nicht hochschlagfest.

In der DE-A-31 23 935 ist ein elektrodynamischer Wandler beschrieben, der ebenfalls einen inneren von einem äußeren Polschuh umgebenden Pol eines Elektromagneten umfaßt, wobei der innere Polschuh auf seiner Stirnfläche Erreger- und Empfangsspule und zudem radial verlaufende Schlitze aufweist, in die gegebenenfalls isolierte Transformatorbleche eingebracht sein können. Dadurch soll ausgeschlossen werden, daß eine Rückkopplung von dem zu überprüfenden Werkstück in den Polschuh zurück erfolgt, so daß eine hohe Auflösung der Meßwerte ermöglicht wird. Ein entsprechender elektrodynamischer Wandlerkopf kann jedoch nicht auf ein zu überprüfendes Werkstück, insbesondere Rohr aufgesetzt und zu diesem bewegt werden, da andernfalls eine sofortige Zerstörung des Meßsystems erfolgen würde.

In der Europäischen Patentanmeldung 00 45 412 und in der Britischen Patentschrift 14 25 201 werden elektrodynamische Wandler beschrieben, deren Erreger- und Empfangsspulen wärmeisoliert auf dem inneren Polschuh eines Magneten angeordnet sind. Die Stirnfläche des Wandlers weist bei der Messung einen Abstand zum überprüfenden Werkstück auf. Hierzu wird nach der GB-PS 14 25 520 ein Luftpolster zwischen Werkstück und Wandler erzeugt. In der DE-OS 28 45 579 wird ein Wandler beschrieben, bei dem die Stirnflächen eines inneren Polschuhs und die diesen umgebenden äußeren Polschuhen konkav ausgebildet sind und der Außenform eines zu überprüfenden Werkstücks angepaßt sind. Die gekrümmten Flächen der Polschuhe weisen ebenfalls einen Abstand zur Werkstückoberfläche auf.

Aufgabe der vorliegenden Erfindung ist es, einen elektrodynamischen Wandler der zuvor beschriebenen Art so auszubilden, daß gefahrlos ein Aufsetzen des elektrodynamischen Wandlers auf ein Werkstück, insbesondere eine Rohr erfolgen kann und diese zueinander eine Relativbewegung beschreiben, ohne daß eine Zerstörung der Erreger- und Empfangsspule erfolgt.

Die Aufgabe wird erfindungsgemäß dadurch gelöst, daß die Abdeckung eine zu der Erreger- und Empfangsspule beabstandete und diese abdeckende Schutzkappe umfaßt, die ihrerseits zumindest teilweise von einem Gleitschutzelement umgeben ist, wobei das Gleitschutzelement einen Basiskörper mit mit dem Werkstück in Berührung kommenden Abschnitten aufweist, die durch in Ausnehmungen des Basiskörpers durch Auftragsschweißung eingebrachte in eine Matrix eingeschmolzene Metallkörner gebildet sind. Dabei stehen zumindest abschnittweise die durch Auftragschweißung gebildeten Abschnitte gegenüber der dem Werkstück zugewandten Fläche des Basiskörpers, der auch als Träger bezeichnet werden kann, vor. Die Matrix selbst besteht vorzugsweise aus einem Kohlenstoffstahl und die Metallkörner aus Hartmetall, wobei deren Härte im Bereich zwischen 1.500 HV (HV=Vickershärte) bis 2.500 HV, vorzugsweise im Bereich um 2.000 HV liegt. Schließlich sollte der Basiskörper aus einem austenitischem Stahl bestehen. Die Verwendung austenitischen Stahls für den Basiskörper zeigt den Vorteil, daß sich in diesem auch dann keine Risse fortsetzen, wenn in der Auftragsschweißung zum Beispiel durch unsachgemäßes Aufsetzen des Wandlers auf ein Werkstück Risse entstehen sollten.

Durch die zuvor aufgeführten Merkmale, die in Kombination und einzeln erfindungswesentlich sind, wird erstmalig ein Schutz für einen elektrodynamischen Wandlerkopf zur Verfügung gestellt, der schlagfest, verschleißarm und temperaturbeständig ist. Dabei kann der Basiskörper zusätzlich formgeschliffen sein, d.h. von der parallel zum abzutastenden Werkstück verlaufenden Fläche abgeschrägte Endabschnitte aufweisen, um beim abrupten Aufsetzen des Wandlers auf ein zu überprüfendes Werkstück eine Kraftaufnahme zu ermöglichen, die eine Zerstörung der Abdeckung ausschließt.

Ganz allgemein können die durch Auftragsschweißen hergestellten Abschnitte, die selbstverständlich nach ihrem Einbringen in die in dem Basiskörper vorhandenen Aussparungen plan geschliffen sind, als Panzerung bezeichnet werden, die sicherstellt, daß eine Zerstörung der für die Messung wesentlichen Elemente, also Erreger- und Empfangsspulen, trotz Entlanggleitens auf der Oberfläche des zu überprüfenden Werkstücks nicht erfolgt. Dabei ermöglicht die erfindungsgemäße Abdeckung 1000 Umdrehungen pro Minute des elektrodynamischen Wandlers um und auf der Oberfläche eines rohrförmigen Werkstücks, ohne daß Beschädigungen zu befürchten sind, gleichwenn die Oberfläche durch Grate und ähnliche Unregelmäßigkeiten überaus rauh ist und einem Schmirgelpapier gleichkommt.

Als weitere besonders hervorzuhebende und eigenerfinderische Merkmale der Erfindung sind Ausbildungen der Schutzkappe aufzuzeigen. So kann die Schutzkappe vorzugsweise aus Metall mit nitrierter Oberfläche bestehen und radiale Schlitze aufweisen, um so eine Wirbelstromausbildung zu unterbinden. Die Schutzkappe selbst, die die Form eines Kegelstumpfs aufweist und einen unteren umlaufenden vorzugsweise parallel zu der Stirnfläche verlaufenden Rand aufweist, liegt polschuhseitig auf einem vorzugsweise aus Hartgewebe-Epoxydharz-Gemisch bestehenden Kappenträger auf, der an der Seitenwandung des konusförmig ausgebildeten Kopfabschnitts des inneren Polschuhs anliegt. Die Schutzkappe wird demzufolge zwischen Abschnitten des Basiskörpers des Gleitschutzelementes und dem Kappenträger festgelegt. Damit die Schutzkappe, die zu der Erreger- und Empfangsspule beabstandet ist, die Meßergebnisse nicht negativ beeinflußt, ist ihre Materialstärke gering zu halten. Vorzugsweise liegt die Stärke bei einem Durchmesser von ca. 20 bis 30 mm im Bereich zwischen 0,3 und 0,5 mm, wobei die Stärke von 0,4 mm besonders zu erwähnen ist. Die in der Schutzkappe eingelassenen radial verlaufenden Schlitze sollten selbst eine Breite aufweisen, die geringer als die Stärke des Schutzkappenmaterials ist. So kann die Breite zwischen 0,2 und 0,4 mm liegen, wobei ein Mittelwert von 0,3 mm besonders geeignet sein dürfte. Auch sollten die Schlitze vorzugsweise im Abstand zum Mittelpunkt der Schutzkappe enden, um die Stabilität der Schutzkappe nicht negativ zu beeinflussen.

Besonders vorteilhaft ist, wenn die Innenfläche der Schutzkappe, also die den Spulen zugewandte Fläche, durch eine Hartgewebeschicht, die ebenfalls aus einem Epoxydharzgemisch besteht, ausgekleidet ist. Dadurch ist sichergestellt, daß durch die Schlitze in den Bereichen

...

der Spulen von der Oberfläche des zu überprüfenden Werkstücks abgeriebene Metallteile nicht eindringen können. Um die Abdichtung der Schlitze zu erhöhen, ist die Hartgewebeschicht auf die Innenfläche vorzugsweise geklebt.

Nach einer weiteren eigenerfinderischen Ausgestaltung der Erfindung wird die Schutzkappe durch eine die Spulen abdeckende Schicht aus synthetischem Stein wie Saphir gebildet. Dabei kann die Saphirschicht spulenseitig mit einer Hartgewebeschicht versehen sein, um so die Festigkeit der aus synthetischem Stein bestehenden Schicht zu erhöhen. Die Stärke sowohl der Schicht aus synthetischem Stein als auch der Hartgewebeschicht sollte im Bereich von 0,2 bis 0,3 mm liegen. Die aus einer Schicht aus synthetischem Stein bestehende Schutzkappe in Form einer Zylinderscheibe, die in einen Kappenträger der zuvor beschriebenen Art eingesetzt sein kann, bietet den Vorteil, daß trotz der Abschirmung der Spulen gegenüber dem Werkstück eine negative Beeinflussung der zu bewertenden Signale nicht erfolgt.

Nach einer weiteren Ausführungsform der Erfindung bilden das Gleitschutzelement mit der Schutzkappe, dem Kappenträger, einem dem Werkstück zugewandten Abschnitt des inneren Polschuhs und der auf diesem angeordneter Erreger- und Empfangsspule einen austauschbaren Wandlerkopf, der über eine Steckverbindung mit einem unteren Bereich des inneren Polschuhs verbunden werden kann. Schließlich kann das Gleitschutzelement selbst von dem Wandlerkopf entfernt und ausgetauscht werden, sofern eine Überprüfung erforderlich ist. Auch hierdurch ergibt sich eine Anwenderfreundlichkeit.

Die Erfindung wird nachstehend anHand eines der Zeichnung zu entnehmenden Ausführungsbeispiels näher erläutert.

Es zeigen:

Fig. 1 eine Draufsicht eines elektrodynamischen Wandlerkopfes,

...

Fig. 2 eine Schnittdarstellung des elektrodynamischen Wandlerkopfs nach Fig. 1 entlang der Linien A-B und

Fig. 3 eine Detaildarstellung einer Schutzkappe des elektrodynamischen Wandlerkopfs gemäß Fig. 1 und 2.

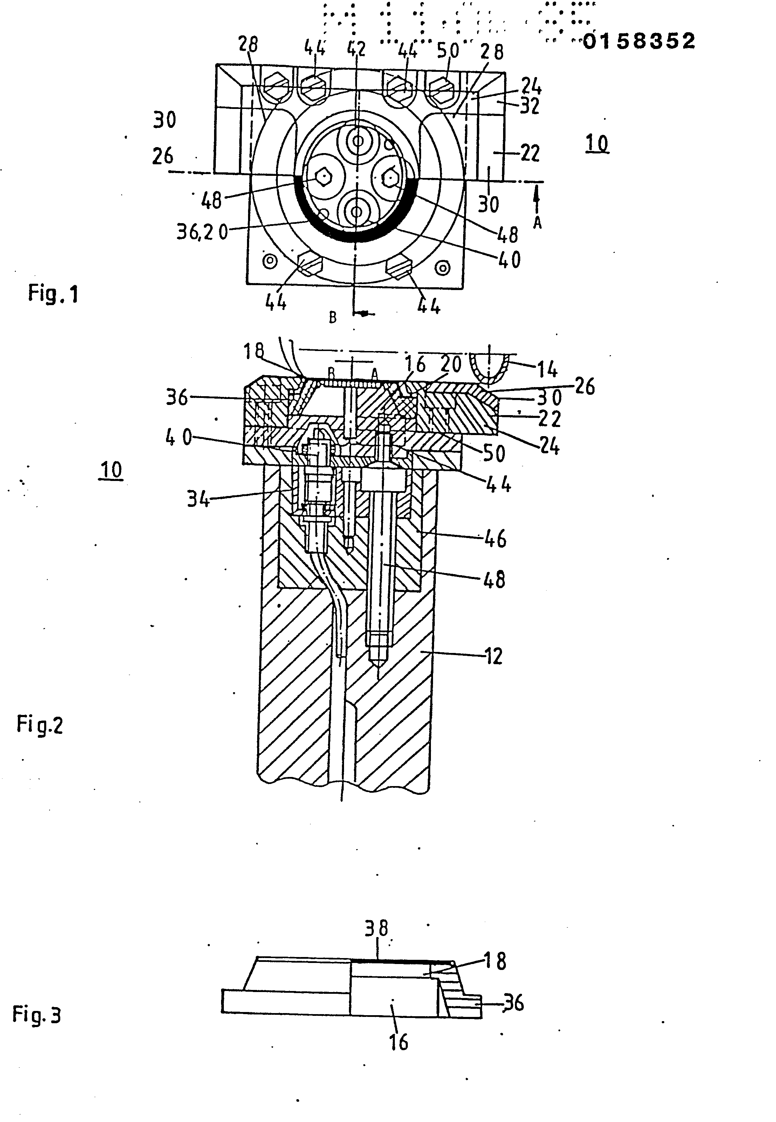

Der in den Fig. 1 und 2 dargestellte elektrodynamische Wandlerkopf 10 ist ein Teil eines Wandlers, der einen Elektromagneten umfaßt, der ein Magnetjoch mit einem nicht dargestellten Außenpolschuh und einen von diesem umgebenen inneren Polschuh 12 aufweist. Der innere Polschuh 12, der auf ein Werkstück 14 in Form eines Rohres ausgerichtet ist, weist einen zum Werkstück 14 hin verjüngten Endabschnitt 16 auf, der gegebenenfalls nicht dargestellte radial ver-laufende Schlitze aufweist, in die ihrerseits nicht dargestellte isolierte Transformatorbleche eingebracht werden können. Eine entsprechende Ausgestaltung des Polschuhkopfs 16 stellt sicher, daß in diesem eine Wirbelstromausbildung unterbunden wird, wodurch andernfalls die Meßergebnisse verfälscht werden könnten. Auf der Stirnseite des Polschuhkopfs 16 befindet sich eine nicht näher bezeichnete Erreger- und Empfangsspule, die für die elektrodynamische Anregung erforderlich ist. (Die elektrodynamische Erzeugung von Ultraschall in elektrisch leitfähigen Medien beruht bekanntlich auf der Wechselwirkung von Wirbelströmen mit statischen Magnetfeldern, wodurch eine Teilchenbewegung im Werkstück, also die Ultraschallwellen erzeugt werden. Dabei wird das erforderliche Magnetfeld vorzugsweise durch einen Elektromagneten über eine gewünschte Polschuhkonfiguration erzeugt. Durch in den Drähten der Erregerspule geführte Hochfrequenzströme werden Wirbelströme im Werkstück erzeugt, deren Einprägtiefe von der verwendeten Frequenz abhängig ist.)

Um den Prüfkopf 10 im Bereich des inneren Polschuhs 16 unmittelbar auf das Rohr 14 aufsetzen zu können, ohne daß bei einer Relativbewegung zwischen diesen eine Beschädigung der Erreger- und Empfangsspule erfolgt, ist die Stirnfläche 18 des Polschuhs 16 und

...

damit die Erreger- und Empfangsspule mit einer Schutzkappe 20 versehen, die sich über die gesamte Stirnfläche 18 erstreckt. Da die Schutzkappe 20 im Bereich der Stirnfläche 18 eine geringe Materialstärke aufweisen muß, um eine negative Beeinflussung der Meßsignale auszuschließen, wird die Schutzkappe 20 selbst von einem Gleitschutzelement 22 zumindest teilweise umfaßt. Das Gleitschutzelement 22 besteht dabei aus einem Basiskörper 24 oder Träger und Abschnitten 26, die ihrerseits unmittelbar mit dem Werkstück 14 in Berührung gelangen und somit über die übrigen dem Werkstück 14 zugewandten Flächen des Basiskörpers 24 vorstehen. Die Abschnitte 26 werden erfindungsgemäß durch in Ausnehmungen 28 des Basiskörpers 24 durch Auftragsschweißen von in einer Matrix eingeschmolzenen Metallkörnern gebildet. Demzufolge stellen die Abschnitte 26 die Auftragsschweißung dar, die eine Panzerung darstellt. Dabei bestehen die Metallkörner aus Hartmetall, wohingegen die Matrix ein Kohlenstoffstahl ist. Der Basiskörper 24 oder Träger für die abriebfesten Abschnitte 26 besteht aus austenitischem Stahl, wodurch sichergestellt ist, daß selbst dann, wenn Risse entstehen sollten, sich diese in dem Träger 24 nicht fortsetzen.

Wie Fig. 1 und 2 verdeutlichen, weisen die Abschnitte 26 eine Quaderform auf. Selbstverständlich sind auch andere Geometrien möglich. Dabei sind die Abschnitte 26 in ihren äußeren Bereichen 30 formgeschliffen, d.h. sie sind von der Oberfläche des Werkstücks 14 abgewinkelt. Dadurch ergibt sich der Vorteil, daß bei einem unsachgemäßen Aufsetzen des Wandlerkopfs 10 auf das Werkstück 14 eine Kräfteaufnahme erfolgt, die eine Zerstörung des Wandlerkopfes 10 weitgehend ausschließt. Selbstverständlich sind im Bereich 30 die angrenzenden Abschnitte 32 des Trägers 24 auch formgeschliffen.

Die Schutzkappe 20 wird von einem Kappenträger 36 aufgenommen, der seinerseits auf der Seitenwandung des konisch ausgebildeten Innenpolschuhs 16 anliegt. Der Kappenträger 36 besteht dabei vorzugsweise aus einem Hartgewebe (HgwEpox) in Form eines Epoxydharzgemisches. Dabei ist die Geometrie der Außenfläche des Kappenträgers 36 der Geometrie der Schutzkappe 20 außerhalb des Stirnbereichs des Pol-

...

schuhs 16 angepaßt. Die Schutzkappe 20 selbst weist vorzugsweise die Form eines Kegelstumpfabschnitts auf, dessen unterer umlaufender Rand nach außen abgewinkelt ist. Ferner besteht die Schutzkappe 20 vorzugsweise aus Metall mit nitrierter Oberfläche und weist radial verlaufende Schlitze auf, wodurch eine Ausbildung von Wirbelströmen vermieden wird. Die Innenfläche der Schutzkappe 20 ist außerdem mit einer Hartgewebeschicht ausgekleidet, um sicherzustellen, daß von dem Werkstückkörper abgeriebene Teile nicht durch die Schlitze dringen können. Vorzugsweist ist die Hartgewebeschicht mit dem Kappenträger verklebt.

Alternativ kann die Schutzkappe 20 durch eine in den Kappenträger 36 eingelassene Schicht 38 aus synthetischem Stein wie zum Beispiel Saphir ersetzt werden. Dadurch ist eine Beeinflussung der Meßsignale durch die Schutzkappe nahezu ausgeschlossen. Die aus synthetischem Stein bestehende Schicht 38 kann dabei spulenseitig von einer Hartgewebeschicht abgedeckt sein, um so die Stabilität zu erhöhen. Eine entsprechende Ausbildung der Schutzkappe ist besonders hervorzuheben.

Wie die Fig. 2 verdeutlicht, ist der Wandlerkopf 10 in Art einer Steckverbindung mit dem inneren Polschuh 12 verbunden. Dabei umfaßt der Wandlerkopf 10 das Gleitschutzelement 22, die Schutzkappe 20 mit Schutzkappenträger 36, den das konische Ende 16 aufweisenden oberen Abschnitt des Polschuhs 12 zusammen mit der Erreger- und Empfangsspule, sowie elektrische Stecker 40, 42 über die die Verbindung zwischen den Spulen und der nicht näher zu beschreibenden Elektrode hergestellt wird. Diese zuvor beschriebenen Elemente umfassende Einheit kann nun mittels Schrauben 44 mit einem Adapter 46 lösbar verbunden werden, der seinerseits in dem Innenpolschuh 12 eingelassen und über eine Schraubverbindung 48 fest verbunden ist. Der Adapter 46 weist ferner Hülsen 34 zur Aufnahme der Steckerbuchsen 40, 42 auf.

Werden die Schrauben 44 gelöst, so kann der Wandlerkopf 10 entfernt und gegebenenfalls ausgetauscht werden. Letzteres kann dann der

...

Fall sein, wenn der elektrodynamische Wandler für andere Materialen und/oder andere Werkstückdimensionierungen Verwendung finden soll.

Unabhängig davon kann das Gleitschutzelement 22 über Schrauben 50 von dem Sondenkopf 10 selbst gelöst werden, um so eine Überprüfung und gegebenenfalls einen Austausch problemlos vornehmen zu können.

- - - - - - - - - - -

0158352

NUKEM GmbH
Rodenbacher Chaussee 6
6450 Hanau/Main 11

Patentansprüche:

1. Elektrodynamischer Wandler zur zerstörungsfreien Prüfung von Werkstücken mittels Ultraschall mit einem Magneten, der ein Magnetjoch mit äußerem Polschuh und einem von diesem umgebenen vorzugsweise sich in Richtung des Werkstücks hin konisch verjüngenden inneren Polschuh aufweist, im Bereich dessen freier dem Werkstück zugewandter Stirnfläche Erreger- und Empfangsspulen angeordnet sind, die ihrerseits zumindest auf der dem Werkstück zugewandten Seite eine Abdeckung aufweisen,
d a d u r c h   g e k e n n z e i c h n e t,
daß die Abdeckung eine zu der Erreger- und Empfangsspule beabstandete und diese abdeckende Schutzkappe (20, 38) umfaßt, die ihrerseits zumindest teilweise von einem Gleitschutzelement (22) umgeben ist, wobei das Gleitschutzelement einen Basiskörper (24) mit mit dem Werkstück (14) in Berührung kommenden Abschnitten (26) aufweist, die durch in Ausnehmungen (28) des Basiskörpers durch Auftragsschweißung eingebrachte in eine Matrix eingeschmolzene Metallkörner gebildet sind.

2. Wandler nach Anspruch 1,
d a d u r c h   g e k e n n z e i c h n e t,
daß die durch Auftragsschweißung gebildeten Abschnitte (26) zumindest abschnittweise gegenüber der dem Werkstück (14) zugewandten Fläche des Basiskörpers (24) vorstehen.

. . .

3. Wandler nach Anspruch 1,

d a d u r c h   g e k e n n z e i c h n e t,

daß die Matrix ein Kohlenstoffstahl und die Metallkörner aus Hartmetall bestehen.

4. Wandler nach Anspruch 3,

d a d u r c h   g e k e n n z e i c h n e t,

daß die Härte der Metallkörner im Bereich von 1.500 HV bis 2.500 HV liegt und vorzugsweise in etwa 2.000 HV beträgt.

5. Wandler nach Anspruch 1,

d a d u r c h   g e k e n n z e i c h n e t,

daß der Basiskörper (24) aus austenitischem Stahl besteht.

6. Wandler nach Anspruch 1,

d a d u r c h   g e k e n n z e i c h n e t,

daß die Schutzkappe (20) aus Metall mit vorzugsweise nitrierter Oberfläche besteht und radial verlaufende Schlitze aufweist.

7. Wandler nach Anspruch 6,

d a d u r c h   g e k e n n z e i c h n e t,

daß die Schutzkappe (20) in Form eines Kegelstumpfs einen nach außen abgewinkelten parallel zur Stirnfläche (18) verlaufendenden unteren Rand aufweist und außerhalb der Stirnfläche des inneren Polschuhs (12, 16) auf einem Kappenträger (36) aufliegt, der seinerseits an dem inneren Polschuh (16) abstützbar ist.

8. Wandler nach Anspruch 7,

d a d u r c h   g e k e n n z e i c h n e t,

daß der Kappenträger (36) aus einem Hartgewebe wie Epoxydharz-Material besteht.

9. Wandler nach Anspruch 6,

d a d u r c h   g e k e n n z e i c h n e t,

daß die Innenfläche der Schutzkappe (20) zumindest im Bereich der Schlitze mit einer Hartgewebeschicht ausgekleidet ist.

...

10. Wandler nach Anspruch 9,

d a d u r c h   g e k e n n z e i c h n e t,

daß die Hartgewebeschicht auf die Innenfläche geklebt ist.

11. Wandler nach Anspruch 1,

d a d u r c h   g e k e n n z e i c h n e t,

daß die Schutzkappe eine Schicht aus synthetischem Stein wie Saphir ist.

12. Wandler nach Anspruch 11,

d a d u r c h   g e k e n n z e i c h n e t,

daß die spulenseitige Innenfläche der Schicht aus synthetischem Stein mit einer Hartgewebeschicht versehen ist.

13. Wandler nach Anspruch 1,

d a d u r c h   g e k e n n z e i c h n e t,

daß das Gleitschutzelement (22) mit der Schutzkappe (20, 38), dem Kappenträger (36), dem dem Werkstück (14) zugewandten Abschnitt (16) des inneren Polschuhs (12) und den auf diesem angeordneten Erreger- und Empfangsspulen als Wandlerkopf lösbar auf dem inneren Polschuh (12) angeordnet sind.

14. Wandler nach Anspruch 13,

d a d u r c h   g e k e n n z e i c h n e t,

daß die lösbare mechanische und/oder elektrische Verbindung zwischen dem Wandlerkopf (10) und dem unteren Bereich des inneren Polschuhs (12, 46) durch eine Steckverbindung erfolgt.

15. Wandler nach Anspruch 13,

d a d u r c h   g e k e n n z e i c h n e t,

daß das Gleitschutzelement (22) für sich von dem Wandlerkopf (10) entfernbar ist.

- - - - - - - - - - -

0158352

Fig.1

Fig.2

10

Fig.3